Europäisches Patentamt

**European Patent Office**  (11) Publication number: **0 077 305**

Office européen des brevets  **A1**

(12) **EUROPEAN PATENT APPLICATION**

(21) Application number: **82830234.9**  (51) Int. Cl.³: **G 01 N 9/20**

(22) Date of filing: **16.09.82**

(30) Priority: **18.09.81 IT 4932381**

(71) Applicant: **Assenza, Donello, Via Attilio Friggeri 19, I-00136 Rome (IT)**

(43) Date of publication of application: **20.04.83 Bulletin 83/16**

(72) Inventor: **Assenza, Donello, Via Attilio Friggeri 19, I-00136 Rome (IT)**

(84) Designated Contracting States: **CH DE FR GB LI**

(54) **An electro-hydrostatic device to measure the specific gravity of liquids.**

㊗ A float constituted by a hollow body of a dielectric material (5) having on the top a metallic conducting disk (16) made from a non ferromagnetic material and on the bottom a permanent magnet (6), is immerged in the liquid (2) in a chalix shaped container (7) where on the exterior of the hollow stem there is a winding (8) constituting an electromagnet driven by the current supplied by the differential amplifier (12).

The float (5, 6, 16) assumes in the liquid a fixed position in virtue of feed-back effect produced by eddy currents position-voltage transducer (18, 15, 17). The current flowing in the electromagnet is proportional, at less than a constant due to the weight of the float (5, 6, 16) to the hydrostatic buoyancy that is to say, to the specific gravity of the liquid.

The fixed position of the float (5, 6, 16) makes the measure independent by the spatial non linearities of the magnetic field and, by non linearity of the positionvoltage transducer (18, 15, 17).

The centering action of electromagnet (8) on the magnet (6) avoids the friction with the walls around the float (5, 6, 16), that remain suspended in the liquid.

- I -

An electro - hydrostatic device to measure the
specific gravity of liquids

The invention relates to a device including
electronic, electrical and mechanical parts,
capable of measuring the specific gravity of
liquids.  This device can be employed with all
viscous liquids (not viscoelastic) and gives
the output a current linearly linked to the
specific gravity.  The evaluation of the specific
gravity is usually effected by the direct method,
that is to say through the determination of the
weight of a known volume of liquid or with
indirect methods which avail themselves of the
measure of density obtained by other means.
Therefore in examining the technical solutions
so far employed we must refer also to the devices
employed in the determination of the density.

The measurement with the direct method, even if
precise, is laborious, lengthy and hardly
automatizable.  The traditional indirect method uses
the so called hydrometer consistent of the glass float
with a graduate emerging portion.  The measurement
is not precise because it is affected by the
problem of the meniscus not exactly definable and
variable according to the characteristics of the liquid
in addition to the mechanical tolerances of the
float.  Moreover, because often the holder of the liquid is small the float tends to adhere to the walls. In that case the friction introduces another source of error.

Recently there have been attempts to automatize the measurement of density with different methods. The most significant ones are based on the measure of optical refraction index of liquids or on the resonance frequency variation of cicumferential vibration modes of metallic cylinder submerged in the liquid.

The first method, besides the problems of constructive precision typical of optical systems lacks the capability of application with opaque liquids. The second method is influenced by the pressure of the liquid, its viscosity and by the variations of the acoustical characteristics of the liquid with the temperature.

Besides the output signal, generally, is not a linear function of density and there are necessaries proper linearization networks. The device here described offers the following advantages. Permits the measurement of any type of liquid providing they have viscous characteristics (not viscoelastic) independently of the transparency of the same.

It does not manifest the meniscus problem. It is not effected by errors due to friction.

- 3 -

The measurement is not affected by the pressure.

The measurement is not influenced by viscosity.

Eventual temperature variations do not influence its precision.  The output signal is linearly related to the specific gravity of liquids.  The output signal is a current which permits long distance transmission. The measurement can be effected on small quantities of liquid.


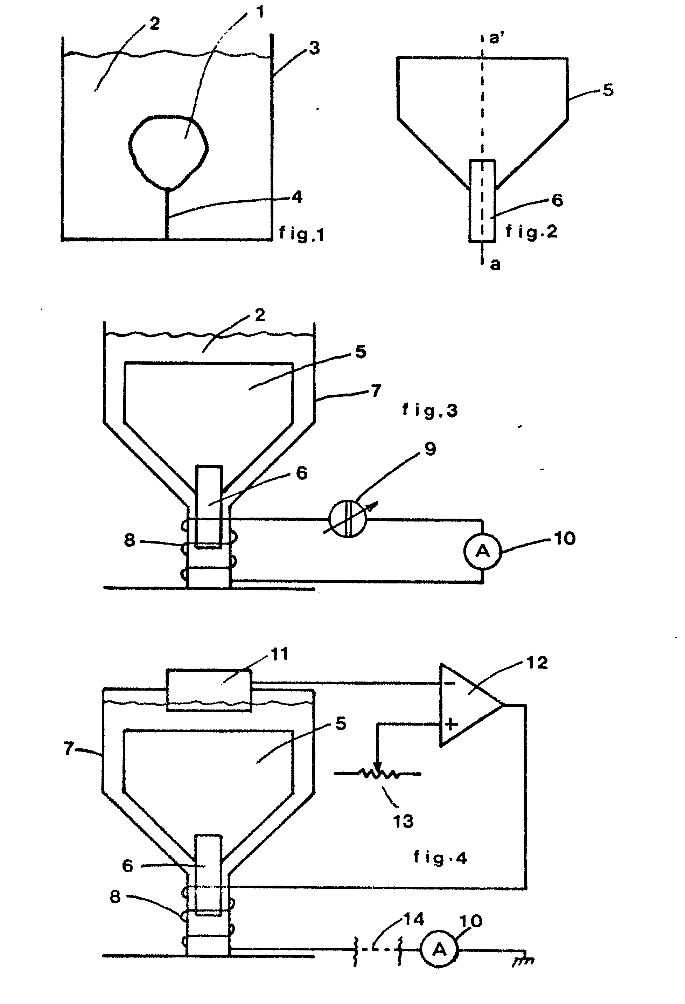

To illustrate the operation principle we will refer to the drawings.  Let us assume that we have the solid 1 (fig 1) that hereinafter we will refer to it as "float" endowed with a consistent buoyancy that tends to bring it to the surface of the liquids of which we want to measure the specific gravity.  The float is completely submerged in the liquid 2 and connected by means of a wire 4 to the bottom of the holder 3, subject the wire to a traction force strictly proportional, at less than a constant  equal to the non negligible weight of the float, to the specific gravity.


The value of the traction force is not affected by the meniscus like in the case of the hydromemter in immersion and therefore constitutes, having a method to measure it correctly, a valid quantity to measure the specific gravity.  In this, paper is used for convenience, but inexactly the term "float".  Really, in the device here illustrated, it works always immersed in the liquid.

On the fig 2 is represented a section of a particular float.  The top part 5, hollow inside, is manufactured of dielectric material (glass, plastic etc) while the bottom cylinder 6 is a permanent magnet. The whole solid has a cylindrical symmetry around the vertical axis aa'.

Let us attempt to imagine now to carry out the experiment illustrated on the fig 3, whose practical limits will be discussed later.

The float 5 and 6 above described is immersed on the chalyx shaped holder 7 containing the liquid 2 to be measured.

The magnet, if the float is pushed down in whatever manner, can position itself inside the bottom and thin part of the holder (stem of chalyx) to whose exterior is present a winding of conducting wire 8. When in this winding there is not a flow of current, the float is carried to the surface by the hydrostatic buoyancy. If instead, by means of current generator 9, we allow the flow in the correct direction a suitable current, the float positions itself in an intermediate position between the liquid top surface and bottom of the holder. The current flowing in the winding 8 in this situation, measurable by means of amperometer I0, is proportional, at less than a constant, to the specific gravity of the liquid. In the event this would substitute with one with different density and, varying current, the float is brought again in the same position of the previous case one would measure a new value tied to the new specific gravity through the same coefficient of proportionality. In this way one obtains a specific

- 5 -

gravity - current transducer that shows the following advantages:

The float is completely immersed inthe. liquid and therefore all problems connected with the meniscus are absent; a centering action on the float is obtained by the couple magnet - electromagnet thus avoiding friction on the walls of the external container; The above mentioned centering action allows the reduction of interspace dimension betweeen the float and the chalyx and consequently permits a precise measurement even in small quantities of liquid. The interaction force between magnet and electromagnet is not affected by non linear spatial distribution of magnetic field because, independently of the specific gravity of liquid, it is possible to bring the float in the same position varying current, in virtue of this the magnetic force is strictly proportional to the current that flows in the electromagnet winding.

The transmission of the information at a big distance is not affected by the wire resistance because the measurement is tied to a current; for the same reason the resistance variation with the temperature (appreciable if one takes into account that the resistance of copper varies almost 4 per thousand per degree centigrade) do not affect the measurements.

The above described outline is really difficult to carry

- 6 -

out because the balance position reached by the float is unstable. Unavoidably in short time it is pushed on the surface or towards the bottom and that is to say towards the electromagnet.

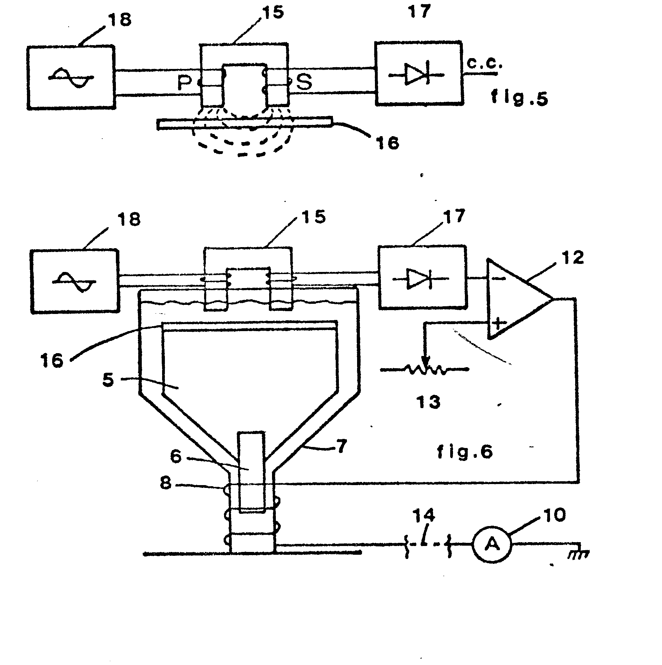

It is necessary to introduce a feed-back device that renders the float position stable. That can be carried out with the fig 4 configuration. The element II is a position - voltage transducer that gives a d.c. voltage directly proportional to its own distance from the float 5. The differential amplifier I2 connected to the transducer and to a variable reference I3 with corrected inputs polarity drives the electromagnet with a voltage that increases in proportion with the float nearing the surface.

It is possible to select the float position more or less near to the transducer, by means of the potentiometer I3, that supplies a variable voltage to non inverting input of differential amplifier. At this stage a position of stable equilibrium will take place because, at a certain point, providing that the amplifier I2 gain is sufficiently high, any additional rise of the float 5 will bring about an increase of the output voltage V of the amplifier and therefore of the field generated by the electromagnet 6 such to oppose the push of the hydrostatic buoyancy.

When the liquid density changes, in spite of buoyancy variations, by virtue of the high gain of the amplifier the float position within the liquid remains more or less the same.

In addition to the motives above mentioned, this results in certain advantages because a small working distance range of position - voltage transducer is involved. Thus its eventual non linearity has insignificant influence on the measurement.

The electromagnet 8 "current feeding" principle is safeguarded also if the amplifier I2 has a conventional low impedance output stage and thusly behaves approximately, as an ideal voltage generator. In fact, by virtue of feed-back effect due to the transducer II voltage V automatically assumes such a value that the current flowing in the circuit is proportional to the specific gravity of liquid independently of the winding or the line I4 resistance variations. If because of temperature, for example, the winding resistance doubles, assuming zero the line I4 resistance, the voltages V doubles keeping the current constant. For the best operation of the system, the position - voltage transducer II must have the following characteristics:
a) Great sensitivity, that is to say strong variation of the output voltage to the varying positions of the float; b) insensitivity to the liquid characteristics; c) reduced dimensions; d) simplicity of the circuitry and consequently low cost; e) no - contact operation.

- 6 -

The position - voltage transducer applicable, on principle, in this case are the following: optical transducers; capacity transducers; ultrasound transducers; magnetic transducers (eddy probes).

The first are employable only with transparent liquids The capacity transducers are affected by the dielectric characteristics of the liquid and show moreover a notable circuital complexity. The ultrasound transducers are expensive and lack precision and are strongly influenced by the acoustical propagation constants of the liquid that are in turn sensitive to temperature. The eddy current magnetic transducers (eddy-probes) on the contrary show the required characteristics.

The possible configuration of this type of transducers are numerous. We will remember the principle referring to the model described on the fig 5.

A sinusoidal oscillator I8 feeds the primary winding (P) of a transformer I5 wound on a core with open magnetic circuit that is with a big air gap. On the same core there is a secondary winding (S), where at the terminals can be observed a sinusoidal voltage.

If on the space zone in front of the magnetic poles is placed a conducting disk made of non ferromagnetic metal (copper, aluminium, etc)there arises in that disk eddy inducted currents which subtract energy from the

field and reduces the value of the secondary voltage.

On removing and approaching the metal disk from the magnetic poles, the secondary voltage, that can be made direct by means of a suitable detector, increases and decreases. In this manner we obtain a position-d.c. voltage transducer.

By opportunely shaping the core a good linearity for little displacement and a high sensitivity can be obtained.

Let us consider now the final configuration assumed by the system with this type of transducer examining fig 6.

The float 6 is provided on the upper surface of an aluminium disk 16 that is in front of the transducer 15. The oscillator 18 fournishes the sinusoidal voltage to the primary winding of transducer 15 whose secondary is connected to a rectifier circuit 17. The a.c. voltage appearing to his terminals, directly proportional to the float distance, feeds the inverting input of differential amplifier 12 that drives the electromagnet 8 and fixes the position of the float 5,6,16 The chalix container 7 can be filled with the liquid under measure by different methods according to his characteristics and the particular type of application.

0077305

In the practical realisation of device an appropriate circuitry must be provided to remove from the output data the constant value of the current due to the weight of the float.

Claims:

1. Electro-Hydrostatic device to measure the specific gravity of liquids that behave viscously able to fournish an output current proportional, at less than a constant, to the measured specific gravity, comprising: a solid (float) having consistent buoyancy on the liquid under measure manufactured by dielectric material (5) having on the top a metallic conducting disk (16) but not ferromagnetic and on the bottom a permanent megnet (6), a chalyx shaped container of the liquid (7) where on the hollow stem there is a winding (8) forming a sucking electromagnet, an eddy current position - voltage transducer (11) connected to a differential amplifier (12) that drives the electromagnet with a current, proportional to the hydrostatic buoyancy, such that in virtue of the feed-back effect, deter- mines a fixed position of the float in the liquid (2) independently by his specific gravity and to exert a centering action on the float that avoids every contact with the surrounding walls.

2. A float (5,6,16) as claimed in claim 1 employed like specific gravity - force transducer that works completely immersed, avoiding in this manner the errors due to the meniscus.

3. A float (5) as claimed in claims 1 and 2 constituted of dielectric material, having on the top a conducting disk made of non ferromagnetic material (16) and on the bottom a permanent magnet (6)

0077305

4. A chalyx shaped container (7) as claimed in claim I, having on the exterior of its hollow stem a winding (8) of conducting wire constituting of a sucking electromagnet.

5. Whole magnet (6) - electromagnet (8), as claimed in claims I,2,3 and 4, constituting a specific gravity - current transducer, that allows to maintain the float immersed in the liquid (2) and to transform the buoyancy in a current.

6. Whole magnet (6) - electromagnet (8), as claimed in claims I,2,3 and 4 constituting a centering system for the float that allows to employ little quantities of liquid, in thus solving the problem of the friction with the walls.

7. Eddy probe position - voltage transducer (II,I8, I5,I7) and differential amplifier (I2) as claimed in claim I acting as a feed-back element able to fix and stabilize the position of the float in the liquid and to linearize the relation of the specific gravity current making it independent by the non linearity of the magnetic field and by the non linearity of the position - voltage transducer.

fig.1

fig.2

fig.3

fig.4

fig.5

fig.6

0077305

## European Patent Office

# EUROPEAN SEARCH REPORT

| Category | Citation of document with indication, where appropriate, of relevant passages | Relevant to claim |
|---|---|---|
| | **DOCUMENTS CONSIDERED TO BE RELEVANT** | |
| Y | US - A - 3 581 556 (R.J. SALVINSKI et al.)<br>* claims 1, 3; fig. 3 * | 1 |
| | -- | |
| | FR - A1 - 2 457 485 (STE D'ETUDES DE TECHNIQUES ET DE REALISATIONS IN-DUSTRIELLES ET COMMERCIALES) | |
| Y | * claims 4 to 6; fig. * | 1,2,4 |
| A | -- | 5-7 |
| Y | JOURNAL OF APPLIED CHEMISTRY USSR, Vol. 52, No. 4, April 1979, New York I.L. KOZLOV et al. "Densimeter for liquid media" page 750 to 754<br>* page 750; fig. 1 * | 1,2,4 |
| | -- | |
| A | US - A - 3 726 128 (O.O. FIET) | |
| | -- | |
| A | US - A - 3 593 585 (E.J.M. BRESSON) | |
| | ---- | |

**CLASSIFICATION OF THE APPLICATION (Int. Cl. 3)**

G 01 N   9/20

**TECHNICAL FIELDS SEARCHED (Int.Cl. 3)**

G 01 N   9/20

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 08-12-1982 | SCHWARTZ |

EPO Form 1503.1   06.78